# EUROPEAN PATENT APPLICATION

(11) **EP 3 578 873 A1**
(43) Date of publication of application: **11.12.2019**
(21) Application number: 18758255.6
(22) Date of filing: 06.02.2018
(51) Int. Cl.: F21S 41/00, F21S 43/00, F21S 45/00, F21V 29/503, F21V 29/60, F21V 29/71, F21V 29/74, F21W 103/00, F21W 104/00, F21W 105/00, F21W 102/00, F21Y 115/10

(54) **LIGHTING FIXTURE FOR VEHICLE**

(30) Priority: 24.02.2017 JP 2017032917
(71) Applicant: Mazda Motor Corporation, Aki-gun, Hiroshima 730-8670 (JP)
(72) Inventor: NAKAYA, Yoshiaki, Aki-gun Hiroshima 730-8670 (JP)
(74) Representative: Behr, Wolfgang
(86) International application number: PCT/JP2018/004093
(87) International publication number: WO 2018/155177

(57) **Abstract**

A vehicle lighting fixture 1 includes a light source 5, a heat sink 10 thermally connected to the light source 5, and an air blower 20. The heat sink 10 includes: a base portion 11 extending outward, relative to the light source 5, in an intersection direction intersecting with an optical axis X of the light source 5; and a heat dissipation portion 12 provided at an outer portion of the base portion 11 in the intersection direction and dissipating heat to the air blown from the air blower 20. The heat dissipation portion 12 includes at least a frontward-extending portion 13 extending frontward relative to the light source 5.

## Description

### TECHNICAL FIELD

The technique disclosed herein relates to a lighting fixture for a vehicle (hereinafter referred to as "vehicle lighting fixture").

### BACKGROUND ART

As exemplified in Patent Document 1, vehicle lighting fixtures including a heat sink disposed behind a light source, and an air blower disposed behind the heat sink have been known. In such vehicle lighting fixtures, the air blower blows the air toward the heat sink to which heat has been conducted from the light source. It is however more preferable that the surface area of the heat sink be increased as much as possible by, e.g., providing heat dissipation fins or the like on the heat sink in order to enhance heat dissipation performance of the heat sink.

### CITATION LIST

### PATENT DOCUMENT

PATENT DOCUMENT 1: Japanese Unexamined Patent Publication No. 2010-254099

### SUMMARY OF THE INVENTION

### TECHNICAL PROBLEM

When the surface area of the heat sink is increased in order to enhance the heat dissipation performance thereof in the above-mentioned configuration, the heat sink is increased in size and weight behind the light source. Simple increase in the surface area of the heat sink has been therefore limited in order to enhance the heat dissipation performance of the heat sink. On the other hand, when the surface area of the heat sink is decreased in order to reduce the size and weight of the vehicle lighting fixture, it is difficult to provide desired heat dissipation performance. The decrease in the surface area of the heat sink has been therefore limited in order to reduce the size and weight of the vehicle lighting fixture.

The technique disclosed herein enhances heat dissipation performance and reduces the size of an overall vehicle lighting fixture.

### SOLUTION TO THE PROBLEM

The presently disclosed technique relates to a vehicle lighting fixture including a light source, a heat sink thermally connected to the light source, and an air blower. The heat sink includes a base portion extending outward, relative to the light source, in an intersection direction intersecting with an optical axis extending frontward relative to the light source, and a heat dissipation portion provided at an outer portion of the base portion in the intersection direction and dissipating heat to air blown from the air blower, and the heat dissipation portion includes at least a frontward-extending portion extending frontward relative to the light source.

According to the above configuration, the surface area of the heat dissipation portion can be increased without causing the heat dissipation portion to further extend backward relative to the light source, thereby enhancing heat dissipation performance of the heat dissipation portion and contributing to reduction in the size and weight of the overall vehicle lighting fixture by a decrease in the longitudinal length of the vehicle lighting fixture.

The expression "frontward" indicates the irradiation direction of the light source, an expression "backward" indicates the direction opposite to the irradiation direction, and an expression "longitudinal direction" indicates the direction parallel to the optical axis of the light source.

In another aspect, the vehicle lighting fixture may further include a heat diffusion member thermally connected to a back surface of the base portion and having a higher heat conductivity than the heat sink.

According to the above configuration, although a large difference in a plate thickness between the base portion and the heat dissipation portion possibly forms an air layer in manufacturing to deteriorate heat efficiency of the heat sink, providing the heat diffusion member on the back surface of the base portion can reduce the plate thickness of the base portion while ensuring heat dissipation performance and heat transfer performance of the base portion itself. Thus, both of efficient heat dissipation and productivity can be achieved while the difference in the plate thickness of the heat sink is reduced. Further, reduction in increase in the plate thickness of the base portion can also substantially prevent the heat sink from being increased in weight.

For example, copper, a copper alloy, or a graphite sheet can be used for the heat diffusion member.

In still another aspect, the heat diffusion member may extend on the back surface of the base portion in the intersection direction so as to make thermal contact with the heat dissipation portion from a position adjacent to the light source in the intersection direction.

According to the above configuration, heat conducted to the heat diffusion member is efficiently transferred to the heat dissipation portion, thereby enhancing cooling performance of the light source by providing the heat diffusion member.

In still another aspect, a surface area enlargement portion may be provided at an outer site of the heat dissipation portion in the intersection direction to have a larger surface area than an inner site of the heat dissipation portion in the intersection direction, and the heat diffusion member extending longitudinally may be provided at the inner site of the heat dissipation portion in the intersection portion.

According to the above configuration, heat conductivity in the longitudinal direction at the inner site of the heat dissipation portion can be enhanced by providing the heat diffusion member extending longitudinally at the inner site of the heat dissipation portion.

In still another aspect, the heat diffusion member may be formed into a plate shape and have an anisotropy so as to have a lower heat conductivity in a plate thickness direction than in a plate surface direction, and a thermoplastic mount member may be provided behind the heat diffusion member to mount at least one of the heat sink or the air blower on a lighting fixture main body member.

According to the above configuration, the mounting member has thermoplasticity and can therefore be influenced by thermal deformation. As for this point, the mounting member can firmly mount the heat sink and/or the air blower on the lighting fixture main body member without thermal deformation by being provided on the back surface of the heat diffusion member having the anisotropy with the lower heat conductivity in the longitudinal direction.

In still another aspect, the heat dissipation portion may be comprised of: a heat dissipation main body provided in a peripheral direction; and a plurality of heat dissipation fins standing outward in the intersection direction from the heat dissipation main body, extending longitudinally, and disposed in the peripheral direction. The plate thickness of the base portion may be equal to or less than twice the plate thickness of each of the heat dissipation fins.

According to the above configuration, the plate thickness of the base portion can be reduced to be equal to or less than twice the plate thickness of the heat dissipation fins, thereby reducing difference in the plate thickness between the base portion and the heat dissipation fins as far as possible, and substantially preventing formation of the air layer in the heat dissipation portion in manufacturing to ensure excellent heat efficiency of the heat dissipation portion.

The surface area enlargement portion may be formed by the heat dissipation fins, or formed by portions enlarging the surface area other than the heat dissipation fins, or formed by both of them.

### ADVANTAGES OF THE INVENTION

The technique disclosed herein can reduce the size of the overall vehicle lighting fixture while increasing the surface area of the heat sink to enhance the heat dissipation performance.

### BRIEF DESCRIPTION OF THE DRAWINGS

[FIG. 1] FIG. 1 is a vertical cross-sectional view of a vehicle lighting fixture according to an embodiment.
[FIG. 2] FIG. 2 is a perspective view of a main part of the vehicle lighting fixture according to the embodiment.
[FIG. 3] FIG. 3 is a perspective cross sectional view illustrating the main part of the vehicle lighting fixture according to the embodiment.
[FIG. 4] FIG. 4 is a front view of the main part of the vehicle lighting fixture according to the embodiment.
[FIG. 5] FIG. 5 is a cross-sectional view taken along line C-C of FIG. 4.
[FIG. 6A] FIG. 6A is an outer appearance view illustrating a main part of an air blower.
[FIG. 6B] FIG. 6B is an enlarged cross-sectional view along line A-A of FIG. 2.
[FIG. 7] FIG. 7 is an analysis view visualizing the air flowing through a heat sink in the embodiment.
[FIG. 8] FIG. 8 is a graph illustrating temperature changes of an LED, a substrate back surface, and the heat sink in accordance with the velocity of the air.

### DESCRIPTION OF EMBODIMENTS

Hereinafter, an embodiment of a vehicle lighting fixture disclosed herein will be described in detail with reference to the drawings. The vehicle lighting fixture, which will be described below, is one example.

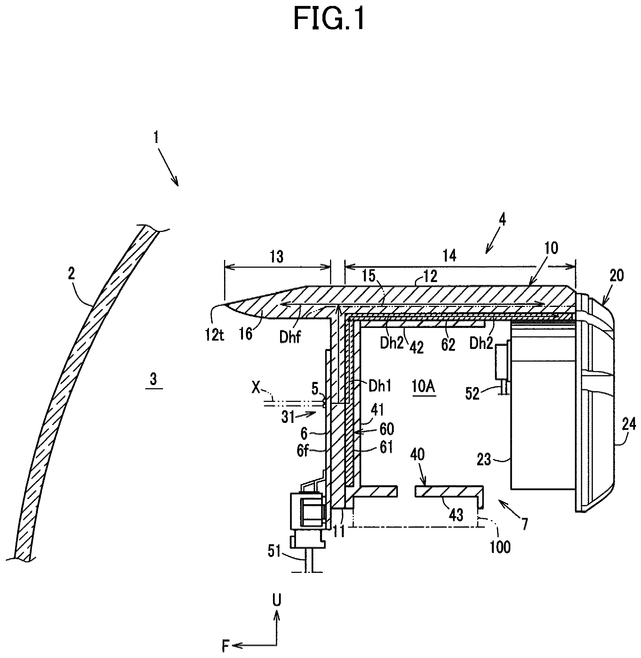

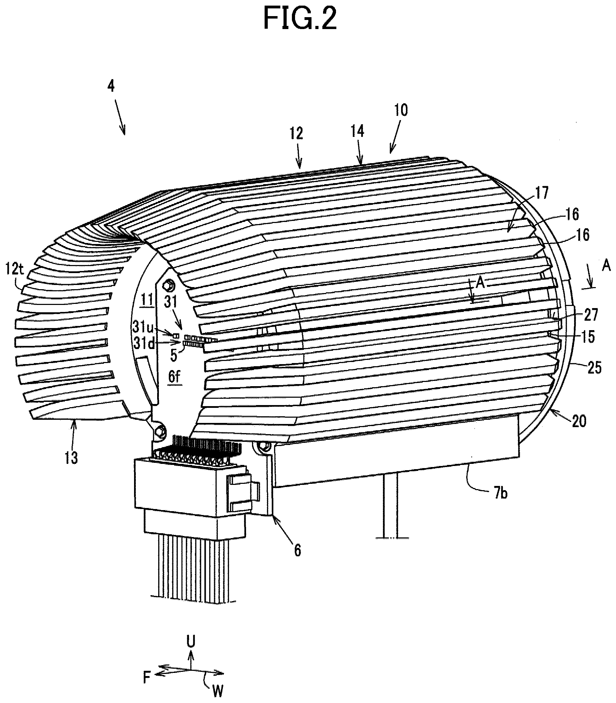

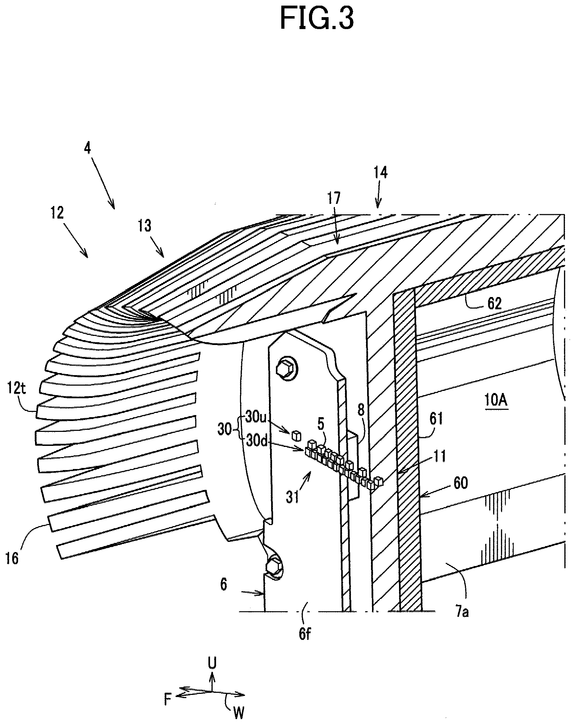

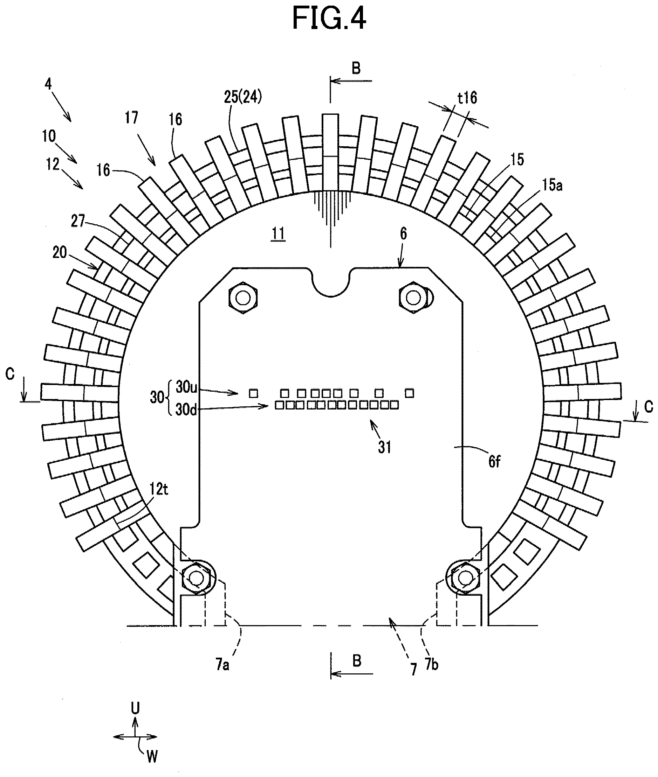

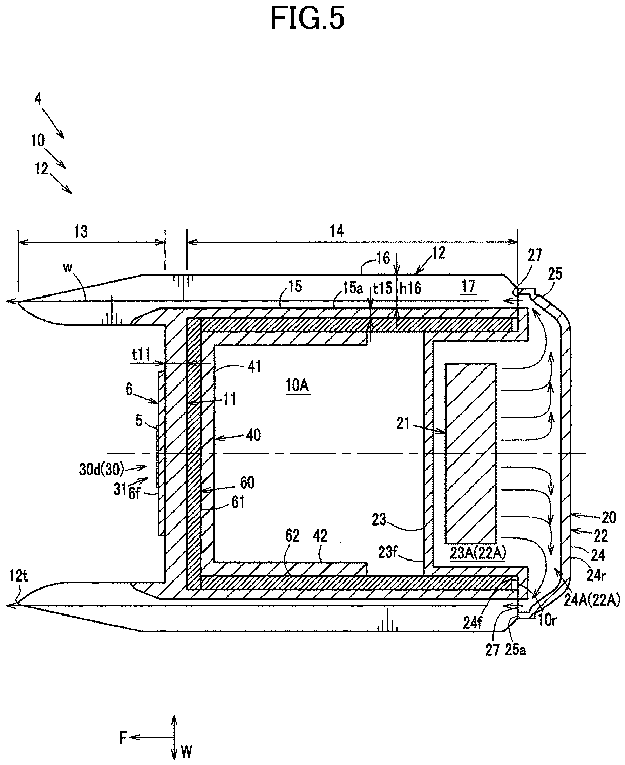

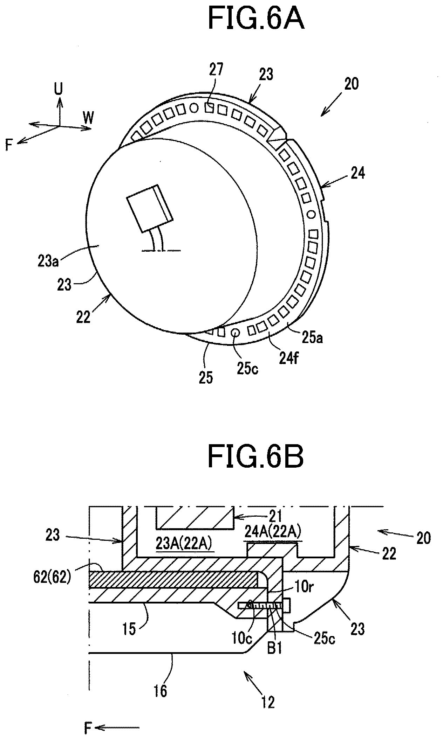

FIG. 1 is a partial vertical cross-sectional view of a center portion of the vehicle lighting fixture according to the embodiment in a vehicle width direction, and is a cross-sectional view taken along line B-B in FIG. 4. FIG. 2 is a perspective view of a main part of the vehicle lighting fixture according to the embodiment. FIG. 3 is a perspective view of a vertical cross section of the center portion of the vehicle lighting fixture according to the embodiment in the vehicle width direction, and is perspective cross-sectional view taken along line B-B in FIG. 4. FIG. 4 is a front view of the main part of the vehicle lighting fixture according to the embodiment. FIG. 5 is a cross-sectional view taken along line C-C of FIG. 4. FIG. 6A is an outer appearance view illustrating a main part of an air blower. FIG. 6B is an enlarged cross-sectional view along line A-A of FIG. 2.

Vehicle lighting fixtures 1, 1 according to the embodiment are used as fog lamps arranged at front right and left positions of the vehicle, and have the same basic configuration on the right and left sides. Therefore, only one vehicle lighting fixture 1 will be described hereinafter. In the drawings, an arrow F indicates a vehicle frontward direction, an arrow W indicates the vehicle width direction, and an arrow U indicates a vehicle upward direction. In the embodiment, the irradiation direction of light emitting diodes (LEDs), that is a light source, included in the vehicle lighting fixture 1 is consistent with the frontward direction of the vehicle.

The vehicle lighting fixture 1 according to the embodiment includes a recessed lamp housing (not illustrated) opening frontward and, as illustrated in FIG. 1, a transparent outer lens 2 covering the front opening thereof. In the vehicle lighting fixture 1, an internal space is defined as a lighting chamber 3 by the lamp housing and the outer lens 2.

As illustrated in FIG. 1, a lamp unit 4 is disposed in the lighting chamber 3. As illustrated in FIGS. 2 and 3, the lamp unit 4 includes LEDs 5 serving as the light source, a flat plate-like substrate 6 made of copper on which the LEDs 5 are mounted, a heat sink 10 thermally connected to the LEDs 5, and an air blower 20 having air blowing openings 27 (see FIG. 2) serving as an air blowing portion.

The substrate 6 is disposed so as to be orthogonal to the longitudinal direction (that is, so as to face the outer lens 2). The LEDs 5 are provided on a center portion of a front surface 6f of the substrate 6 in front view (that is, when seen from the outer lens 2) in order to enlarge an irradiation range, as illustrated in FIG. 4. The LEDs 5 are mounted such that all of them are directed to the front (that is, optical axes X of the LEDs 5 are consistent with the longitudinal direction).

The LEDs 5 are arranged in rows extending in the vehicle width direction to constitute light source arrangement portions 30 (30u, 30d). The number and arrangement of the LEDs 5 are appropriately set in accordance with, e.g., luminance required as the vehicle lighting fixture 1, and the two light source arrangement portions 30 are mounted on the front surface of the substrate 6 on the upper and lower rows in parallel to each other in this example. The two light source arrangement portions 30 form an LED module 31. Nine LEDs 5 are arranged in the upper light source arrangement portion 30u in a predetermined array pattern, and twelve LEDs 5 are arranged in the lower light source arrangement portion 30d in a predetermined array pattern.

The heat sink 10 is made of aluminum or an aluminum alloy, and is disposed behind the LED module 31. The heat sink 10 is comprised of a base portion 11 and a heat dissipation portion 12 which are integrally formed with each other. The base portion 11 extends radially outward relative to the LED module 31. The heat dissipation portion 12 is disposed at a radially outward portion of the base portion 11 (that is, outward portion in the direction intersecting with the optical axes X). The substrate 6 is mounted on the base portion 11 by, e.g., being bonded to the front surface of the base portion 11 using, e.g., Si-based conductive grease 8 as an adhesive having heat conductivity (see FIG. 3). The base portion 11 thereby exchanges heat with the substrate 6 to dissipate heat of the LEDs 5 and conduct the heat to the heat dissipation portion 12.

The air blower 20 is provided behind the base portion 11, and the air blowing openings 27 are provided behind the heat dissipation portion 12.

The heat dissipation portion 12 is provided at the radially outward portion, of the base portion 11, radially outward of at least the LED module 31 over the entire periphery of the heat sink 10 except a lower portion of the heat sink 10.

The heat dissipation portion 12 extending substantially longitudinally and cylindrically shaped is formed into a substantially C shape when viewed from the front such that a lower portion of the heat dissipation portion 12 opens downward (see FIG. 4). A lower opening 7, of the heat dissipation portion 12, that opens downward is formed over the entire length of the heat dissipation portion 12 in the longitudinal direction. Both edge portions 7a and 7b of the lower opening 7 in the peripheral direction project downward. That is to say, in the peripheral direction, one opening edge portion 7a projecting downward is formed on one edge portion of the heat dissipation portion 12 and the other opening edge portion 7b is formed on the other edge portion thereof (see FIG. 4).

As illustrated in FIGS. 1 and 2, the heat dissipation portion 12 is comprised of a frontward-extending portion 13 extending frontward relative to the base portion 11 to the front of the outer lens 2 and a backward-extending portion 14 extending backward. The frontward-extending portion 13 extends such that a front end 12t thereof is located frontward of the LEDs 5. The frontward-extending portion 13 is thereby disposed so as to surround the substrate 6 (LED module 31) other than a lower portion thereof in the peripheral direction.

The backward-extending portion 14 extends with a larger longitudinal length than that of the frontward-extending portion 13. The backward-extending portion 14 and the base portion 11 define a heat sink internal space 10A opening backward and downward on the radially inner side of the backward-extending portion 14 and behind the base portion 11.

In other words for the heat dissipation portion 12, as illustrated in FIGS. 2 and 5, the heat dissipation portion 12 is comprised of a heat dissipation main body 15 and a plurality of heat dissipation fins 16 which are integrally formed with each other. The heat dissipation main body 15 is located on the radially inner side. The plurality of heat dissipation fins 16 stand radially outward from the heat dissipation main body 15.

The heat dissipation main body 15 is continuously formed with a constant thickness (plate thickness) in the peripheral direction of the heat dissipation portion 12 (see FIG. 5). The heat dissipation main body 15 is formed continuously in the longitudinal direction at sites of the heat dissipation portion 12 in the longitudinal direction that correspond to a back portion of the frontward-extending portion 13, the base portion 11, and the backward-extending portion 14.

The heat dissipation fins 16 continuously extend linearly in the longitudinal direction on the outer peripheral surface of the heat dissipation main body 15 and are arranged at an equal pitch in the peripheral direction.

As illustrated in FIGS. 1 and 3, the heat dissipation fins 16 extend not only to a site of the frontward-extending portion 13 that corresponds to the heat dissipation main body 15 provided in the back portion thereof in the longitudinal direction but also to the front end 12t of the frontward-extending portion 13 from the site that corresponds to the heat dissipation main body 15. That is to say, the heat dissipation fins 16 are continuously formed with a constant plate thickness (t16) over the entire length of the heat dissipation portion 12 in the longitudinal direction.

Therefore, the heat dissipation fins 16 provided in the frontward-extending portion 13 in front of the heat dissipation main body 15 radially communicate with one another because the heat dissipation main body 15 is not provided in the frontward-extending portion 13 (see FIGS. 3 and 5).

The thickness of the heat dissipation fins 16 provided in the frontward-extending portion 13 in the radial direction are formed to be gradually decreased in thickness so as to be tapered frontward.

As illustrated in FIG. 5, the heat dissipation fins 16 provided in the backward-extending portion 14 are formed to have a larger projecting length (length in the radial direction) (h16) than the thickness (plate thickness) (t11) of the base portion 11. As illustrated in FIGS. 4 and 5, the base portion 11 is formed to be thicker than each of the heat dissipation main body 15 and the heat dissipation fins 16 (t11 > t15, t16), but the thickness (t11) of the base portion 11 is equal to or less than twice each of the plate thickness (t15) of the heat dissipation main body 15 and the plate thickness (t16) of the heat dissipation fins 16.

The heat dissipation portion 12 extends longitudinally so as to dissipate heat to the air blown from the air blowing openings 27 and direct the air to at least the front end 12t in the heat dissipation fins 16, 16.

That is to say, as illustrated in FIGS. 2 to 5, air guiding paths 17 extending linearly in the longitudinal direction are formed between the heat dissipation fins 16, 16 adjacent to each other in the peripheral direction of the heat dissipation portion 12 from the front end 12t to the back end. The air guiding paths 17 are flow paths having both side walls formed by the adjacent heat dissipation fins 16 so as to direct the air ejected from the air blowing openings 27, which will be described later, toward the outer lens 2 on the front side.

The air guiding paths 17 are formed, at the site of the heat dissipation portion 12 with the heat dissipation main body 15 in the longitudinal direction, by the heat dissipation fins 16, 16 adjacent to each other in the peripheral direction and a radial outer surface 15a of the heat dissipation main body 15 between the heat dissipation fins 16, so as to have recess shapes recessed radially inward relative to the front ends of the heat dissipation fins 16 when viewed from the direction orthogonal to the longitudinal direction.

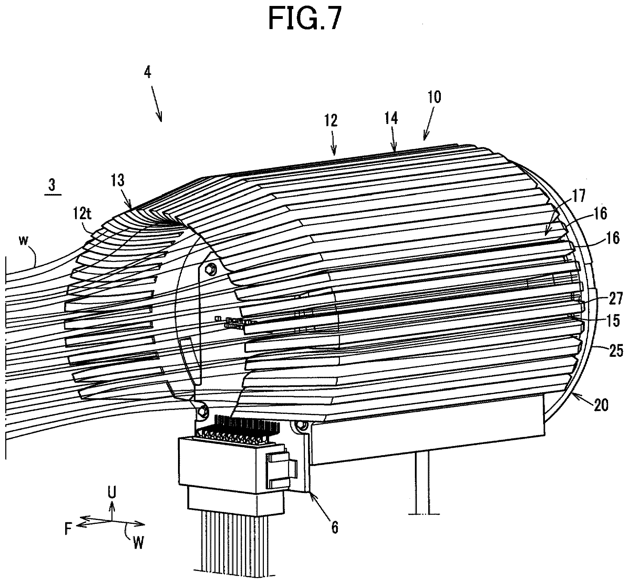

The air blown from the air blowing openings 27 directs to at least the front end 12t in the heat dissipation fins 16, 16 along the air guiding paths 17 while being guided by the heat dissipation fins 16 like the flow of the air w in FIGS. 5 and 7 to accelerate heat dissipation of the heat sink 10.

As illustrated in FIGS. 1, 2, and 5, the air blower 20 is mounted on the heat sink 10 in a state of being fitted into the heat sink internal space 10A from a back opening of the heat sink internal space 10A. The air blower 20 is comprised of, as illustrated in FIG. 5, a piezoelectric fan unit 21 and a casing 22 accommodating therein the piezoelectric fan unit 21.

The casing 22 is comprised of a housing 23 and a back cover 24. The housing 23 is fitted into the heat sink internal space 10A and is formed into a bottomed cylindrical shape having a back-opening internal space 23A with a closed front surface 23f.

The back cover 24 is formed into a bottomed cylindrical shape having a front-opening internal space 24A with a closed back surface 24r, the shape being shallower than that of the housing 23. An opening is formed in a center portion of the front surface 24f of the back cover 24. The internal space 23A of the housing 23 and the internal space 24A of the back cover 24 communicate with each other in the longitudinal direction, and constitute an internal space 22A of the casing 22.

An outer peripheral portion of the back cover 24 is provided with a flange portion 25 formed to project radially outward relative to the outer diameter of the housing 23 entirely in the peripheral direction so as to be engaged, from the back side, with a back end surface 10r of the heat sink 10.

As illustrated in FIGS. 5 and 6A, an annular front surface 25a of the flange portion 25 is formed by a radial side portion relative to the opening provided in the center portion of the front surface 24f of the back cover 24. The air blowing openings 27 opening backward so as to allow the internal space 22A of the casing 22 and the outside of the casing 22 to communicate with each other are arranged in the peripheral direction in the front surface 25a of the flange portion 25. As illustrated in FIGS. 2, 4, and 5, the air blowing openings 27 are provided at sites corresponding to the air guiding paths 17 (that is, sites corresponding to portions between the adjacent heat dissipation fins 16, 16) in the peripheral direction of the heat dissipation portion 12, and the air blown from the piezoelectric fan unit 21 arranged in the casing 22 is ejected from the air blowing openings 27.

As illustrated in FIGS. 6A and 6B, a bolt insertion hole 25c is formed at a predetermined site of the flange portion 25 of the back cover 24 in the peripheral direction, and a bolt insertion hole 10c is formed also at a site of the back end surface 10r of the heat sink 10 that corresponds to the bolt insertion hole 25c in the peripheral direction. The air blower 20 is mounted on the heat sink 10 using, e.g., a bolt B1 in a state in which the flange portion 25 is engaged with the back end surface 10r of the heat sink 10.

The piezoelectric fan unit 21 is a well-known fan generating the air using a reverse voltage effect of a piezoelectric element, and includes the piezoelectric element, a blade-like air blowing plate connected to the piezoelectric element in a cantilever manner, and an AC voltage application unit applying an AC voltage to the piezoelectric element to excite the air blowing plate and cause the front end (free end) of the air blowing plate to vibrate in the plate thickness direction although they are not illustrated in the drawings. In the embodiment, the piezoelectric fan unit 21 is installed in the internal space 22A of the casing 22 so as to generate the air backward by vibration of the air blowing plate.

The air blower 20 is thereby configured such that, in the casing 22, the air blown from the piezoelectric fan unit 21 once hits the back surface 24r of the back cover 24, and then, flows so as to come around radially outward (toward the flange portion 25) to be ejected from the air blowing openings 27.

As illustrated in FIG. 1, the above-mentioned lamp unit 4 is provided, in the inner peripheral surface forming the heat sink internal space 10A, with a heat diffusion member 60 having a higher heat conductivity than the heat sink. The heat diffusion member 60 includes: a plate shaped, heat diffusion member 61 adjacent to the base portion 11; and a heat diffusion member 62 adjacent to the heat dissipation portion 12, formed into a C-shape viewed from the rear, and opening downward.

The heat diffusion member 61 adjacent to the base portion 11 is thermally connected to the base portion 11 by being bonded to the substantially entire back surface of the base portion 11 using an adhesive such as conductive grease (not illustrated) having heat resistance and heat conductivity.

The heat diffusion member 61 adjacent to the base portion 11 extends radially outward along the back surface of the base portion 11 from a center portion of the base portion 11 when viewed from the front, and is connected to the front end of the heat diffusion member 62 adjacent to the heat dissipation portion 12. Thus, the heat diffusion member 61 adjacent to the base portion 11 thus extends so as to make thermal contact with the heat dissipation portion 12. The heat diffusion member 61 adjacent to the base portion 11 is formed by a graphite sheet having an anisotropy so as to have a lower heat conductivity in the longitudinal direction (plate thickness direction) than in the radial direction (plate surface direction).

The heat diffusion member 62 adjacent to the heat dissipation portion 12 is thermally connected to the heat dissipation portion 12 by being bonded to the substantially entire inner peripheral surface of the heat dissipation main body 15 in the backward-extending portion 14 of the heat dissipation portion 12 using, e.g., an adhesive having heat resistance and heat conductivity, just like the heat diffusion member 61 adjacent to the base portion 11. The heat diffusion member 62 adjacent to the heat dissipation portion 12 thereby extends longitudinally from the front end to the back end of the backward-extending portion 14 on the inner peripheral surface of the heat dissipation main body 15. The heat diffusion member 62 adjacent to the heat dissipation portion 12 is formed by a graphite sheet having anisotropy so as to have a lower heat conductivity in the radial direction (plate thickness direction) than in the longitudinal direction (plate surface direction).

The above-mentioned lamp unit 4 is mounted, using, e.g., a bolt, in a state of being installed on a lamp unit base portion 100 (see FIG. 1) with an inner bracket 40 as a component connecting member interposed therebetween. The lamp unit base portion 100 is a member provided at the bottom of the lamp housing 23, and included in a lighting fixture main body member (not illustrated).

A reference character 51 in FIG. 1 is a power source cord supplying a current to the LEDs 5 from a power source such as a battery, a control cord for transmitting a control signal of a control circuit controlling ON/OFF of lighting, or the like. A reference character 52 in FIG. 1 is a power source cord for supplying a current to the air blower 20 from the power source such as the battery, a control cord for transmitting a control signal of a control circuit controlling the piezoelectric fan unit 21, or the like.

As illustrated in FIGS. 1 and 5 (not illustrated in Fig. 3), the inner bracket 40 is formed into a recess shape so as to surround the heat sink internal space 10A and open backward. Specifically, the inner bracket 40 is comprised of a plate-like bracket front wall portion 41, a bracket peripheral wall portion 42, and a plate-like bracket base portion 43 which are integrally formed with each other using a thermoplastic resin. The plate-like bracket front wall portion 41 is disposed at a site corresponding to a front surface portion of the heat sink internal space 10A. The bracket peripheral wall portion 42 is disposed on the peripheral surface of the heat sink internal space 10A other than the lower portion. The plate-like bracket base portion 43 is disposed so as to cover the lower opening 7.

The bracket front wall portion 41 is arranged so as to abut against the back surface of the heat diffusion member 61 adjacent to the base portion 11, and is integrally mounted on the base portion 11 using, e.g., a bolt with the heat diffusion member 61 adjacent to the base portion 11 interposed between the bracket front wall portion 41 and the base portion 11 in the longitudinal direction. That is to say, the bracket front wall portion 41 extends radially so as to integrally connect the front end of the bracket base portion 43 and the front end of the bracket peripheral wall portion 42.

As illustrated in FIG. 5, the bracket peripheral wall portion 42 is arranged so as to abut against the inner peripheral surface of the heat diffusion member 62 adjacent to the heat dissipation portion 12 in the backward-extending portion 14 such that it supports the heat dissipation portion 12 from the inner side in the radial direction. That is to say, the bracket peripheral wall portion 42 is integrally mounted on the heat dissipation main body 15 using, e.g., a bolt with the heat diffusion member 62 adjacent to the heat dissipation portion 12 interposed therebetween in the radial direction, and extends longitudinally to the front of the air blower 20 from the front end of the backward-extending portion 14.

The bracket base portion 43 is formed into a plate shape extending backward from the lower end of the bracket front wall portion 41, and is mounted using, e.g., a bolt in a state of being installed on the lamp unit base portion 100.

Thus, the heat sink 10 is mounted on the lamp unit base portion 100 with the inner bracket 40 interposed therebetween. The LEDs 5, the substrate 6, and the base portion heat diffusion member 61 are mounted on the base portion 11, and the air blower 20 and the heat diffusion member 62 are mounted on the heat dissipation portion 12. The LEDs 5, the substrate 6, the air blower 20, and the heat diffusion member 60 are therefore also mounted on the lamp unit base portion 100 with the heat sink 10 and the inner bracket 40 interposed therebetween.

The air blower 20 is not limited to be mounted on the inner bracket 40 with the heat sink 10 interposed therebetween as described above, and may employ a configuration of being mounted directly on the inner bracket 40 with no heat sink 10 interposed therebetween or a configuration including both of them, that is, the configuration including a mounting portion on the heat sink 10 and a mounting portion on the inner bracket 40.

The above-mentioned vehicle lighting fixture 1 in the embodiment includes the LEDs 5 as the light source, the heat sink 10 thermally connected to the LEDs 5, and the air blower 20. The heat sink 10 includes the base portion 11 extending outward, relative to the LEDs 5, in the direction intersecting with the optical axes X of the LEDs 5, that is, extending radially outward, and the heat dissipation portion 12 provided radially outward of the base portion 11 and dissipating heat to the air blown from the air blower 20. The heat dissipation portion 12 includes at least the frontward-extending portion 13 extending frontward relative to the LEDs 5.

According to the above configuration, the heat dissipation portion 12 includes the frontward-extending portion 13 extending frontward relative to the LEDs 5, so that a limited space in the lighting chamber 3, that is, the longitudinal length between the outer lens 2 and the LEDs 5 can be effectively utilized to achieve reduction in size, and heat dissipation performance can be enhanced by increasing the surface area of the heat dissipation portion 12 (see, a reference character Dhf indicating a part of the heat transfer direction in FIG. 1).

In addition, the heat dissipation portion 12 is provided on the radially outer side relative to the LEDs 5, so that light irradiation from the LEDs 5 is not blocked even when the frontward-extending portion 13 extending frontward relative to the LEDs 5 is provided.

In one aspect, the vehicle lighting fixture 1 further includes the heat diffusion member 60 (heat diffusion member 61 adjacent to the base portion 11) thermally connected to the back surface of the base portion 11 and having a higher heat conductivity than the heat sink 10 is provided.

The base portion 11 is provided behind the LEDs 5, that is, provided at a position closer to the LEDs 5 than the heat dissipation portion 12 is. Heat of the LEDs 5 therefore needs to be quickly absorbed and diffused, and the base portion 11 preferably has a large plate thickness.

On the other hand, the heat sink 10 itself can be increased in weight by simply increasing the plate thickness of the base portion 11. Provision of the heat diffusion member 60 on the base portion 11 can however enhance the heat conductivity of the heat sink 10 including the heat diffusion member 60 provided behind the LEDs 5 while substantially preventing increase in the plate thickness of the base portion 11, thereby achieving both of efficient heat dissipation and reduction of the heat sink 10 in weight.

Large difference in the plate thickness between the base portion 11 and the heat dissipation portion 12 possibly forms an air layer in manufacturing, deteriorating heat efficiency of the heat sink 10. The difference in the plate thickness between the heat dissipation portion 12 and the base portion 11 having the larger plate thickness than the heat dissipation portion 12 can be reduced by substantially preventing increase in the plate thickness of the base portion 11 as described above, thereby achieving both of efficient heat dissipation and productivity (mass productivity).

In another aspect, the heat diffusion member 60 extends radially on the back surface of the base portion 11 so as to make thermal contact with the heat dissipation portion 12 from a position adjacent to the LEDs 5 in the radial direction.

According to the above configuration, heat absorbed by the heat diffusion member 60 is efficiently transferred to the heat dissipation portion 12 (see, a reference character Dh1 indicating a part of the heat transfer direction in FIG. 1), thereby enhancing cooling performance of the LEDs 5 by providing the heat diffusion member 60.

In still another aspect, the heat dissipation fins 16 are provided at the outer site of the heat dissipation portion 12 in the radial direction as a surface area enlargement portion to have a larger surface area than the inner site of the heat dissipation portion 12 in the radial direction, and the heat diffusion member 60 (that is, the heat diffusion member 62 adjacent to the heat dissipation portion 12) extending longitudinally is provided at the inner site of the heat dissipation portion 12 in the radial direction.

According to the above configuration, the heat conductivity in the longitudinal direction at the inner site of the heat dissipation portion 12 can be enhanced by providing the heat diffusion member 62 extending longitudinally at the inner site of the heat dissipation portion 12 (see, a reference character Dh2 indicating a part of the heat transfer direction in FIG. 1).

Provision of the heat diffusion member 62 at the inner site of the heat dissipation portion 12 enables the heat diffusion member 62 adjacent to the heat dissipation portion 12 to be provided in a state of being firmly mounted in comparison with the case in which the heat diffusion member 62 is mounted at the outer site of the heat dissipation portion 12 with the heat dissipation fins 16 formed to have the large surface area. Furthermore, provision of the heat diffusion member 62 at the inner site of the heat dissipation portion 12 can substantially prevent inhibition of excellent heat dissipation performance of the heat dissipation fins 16 themselves because of the provision of the heat diffusion member 62 adjacent to the heat dissipation portion 12 due to reduction in the surface area of the heat dissipation fins 16 formed so as to increase the surface area as in the case in which the heat diffusion member 62 adjacent to the heat dissipation portion 12 is provided at the outer site of the heat dissipation portion 12.

In still another aspect, the heat diffusion member 61 of the heat diffusion member 60 has the anisotropy so as to have a lower heat conductivity in the longitudinal direction than in the radial direction, and the inner bracket 40, as an attachment member, is provided behind the heat diffusion member 61 adjacent to the base portion 11 to have thermoplasticity and mount at least one of the heat sink 10 or the air blower 20 on the lamp unit base portion 100 of the lighting fixture main body member.

In this example, both of the heat sink 10 and the air blower 20 are mounted on the lamp unit base portion 100 (see FIG. 1) included in the lighting fixture main body member with the inner bracket 40 interposed therebetween.

According to the above configuration, the inner bracket 40 is made of the thermoplastic resin, and can therefore be influenced by thermal deformation including expansion with heat. As for this point, the heat diffusion member 61 of the heat diffusion member 60 has the anisotropy so as to have a lower heat conductivity in the plate thickness direction than in the plate surface direction, so that the inner bracket 40 can firmly mount the heat sink 10 and the air blower 20 on the lighting fixture main body member (housing) without thermal deformation even by providing the inner bracket 40 made of the thermoplastic resin on the back surface of the heat diffusion member 61 adjacent to the base portion 11 using the characteristics.

In still another aspect, the heat dissipation portion 12 is comprised of: the heat dissipation main body 15 provided in the peripheral direction thereof; and the heat dissipation fins 16 standing radially outward from the heat dissipation main body 15, extending longitudinally, and disposed in the peripheral direction. The thickness (t11) of the base portion 11 is equal to or less than twice the plate thickness (t16) of each of the heat dissipation fins 16 (see FIGS. 4 and 5).

With the above-mentioned configuration, the plate thickness of the base portion 11 can be reduced to be equal to or less than twice the plate thickness of each of the heat dissipation fins 16, thereby reducing the difference in the plate thickness between the base portion 11 and the heat dissipation fins 16 as far as possible, and substantially preventing formation of the air layer in the heat dissipation portion 12 in manufacturing, thereby ensuring excellent heat efficiency of the heat dissipation portion 12.

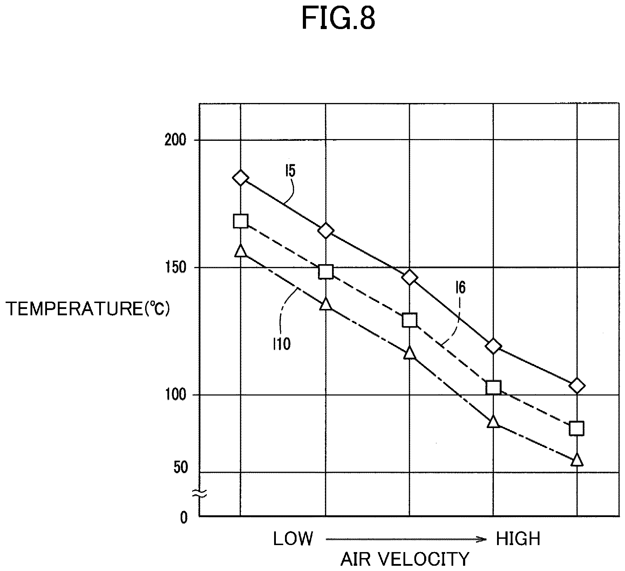

As described above, the frontward-extending portion 13 of the heat sink 10 is provided, the heat diffusion member 61 adjacent to the base portion 11 is provided on the back surface of the base portion 11, and the heat diffusion member 62 is provided at the inner site of the heat dissipation portion 12 in the radial direction. This accelerates heat dissipation of the heat sink 10 and heat conduction to the heat sink 10 from the LEDs 5 and the substrate 6, thereby enhancing the cooling effect of the LEDs 5. This effect can be enhanced with an increase in the velocity of the air blown from the air blowing openings 27, as illustrated in FIG. 8.

FIG. 8 illustrates temperature changes at sites of the LEDs 5, the substrate 6, and the heat sink 10 in accordance with the velocity of the air that is ejected from the air blowing openings 27. A wave form 15 indicated by a solid curve in FIG. 8 indicates the temperature change on the LEDs 5, a wave form 16 indicated by a broken curve indicates the temperature change on the back surface of the substrate 6, and a wave form 110 indicated by a dashed-dotted curve indicates the temperature change on the base portion 11 of the heat sink 10 in accordance with the velocity of the air.

The technique disclosed herein is not limited to only the configuration in the above-mentioned embodiment, and can be implemented by various embodiments.

In the specification, the expression "frontward" indicates the irradiation direction of the light source, and the expression "behind (backward)" indicates the direction opposite to the irradiation direction of the light source. Although the above-mentioned embodiment has described the example in which the irradiation direction of the LEDs 5 is consistent with the frontward direction of the vehicle and the irradiation direction of the LEDs 5 is consistent with the irradiation direction of the lighting fixture unit, they may not be necessarily consistent with each other.

Specifically, when the vehicle lighting fixture includes a reflector (not illustrated), the expression "frontward" indicates the direction toward the reflector before the light emitted from the LEDs 5 refracts by the reflector and indicates the direction toward the outer lens (outward of the vehicle lighting fixture) after the refraction.

### DESCRIPTION OF REFERENCE CHARACTERS

- 1: Vehicle Lighting Fixture
- 5: LED (Light Source)
- 10: Heat Sink
- 11: Base Portion
- 11r: Back Surface
- 12: Heat Dissipation Portion
- 13: Frontward-extending Portion
- 15: Heat Dissipation Main Body
- 16: Heat Dissipation Fin (Surface Area Enlargement Portion)
- 20: Air Blower
- 40: Inner Bracket (Mount Member)
- 60: Heat Diffusion Member
- 61: Heat Diffusion Member adjacent to Base Portion
- 62: Heat Diffusion Member adjacent to Heat Dissipation Portion
- X: Optical Axis
- t11: Thickness of Base Portion
- t16: Projecting Length of Heat Dissipation Fin

## Claims

1. A vehicle lighting fixture comprising a light source, a heat sink thermally connected to the light source, and an air blower, wherein
the heat sink includes:
a base portion extending outward, relative to the light source, in an intersection direction intersecting with an optical axis extending frontward relative to the light source; and
a heat dissipation portion provided at an outer portion of the base portion in the intersection direction and dissipating heat to air blown from the air blower, and
the heat dissipation portion includes at least a frontward-extending portion extending frontward relative to the light source.

2. The vehicle lighting fixture of claim 1, further comprising
a heat diffusion member thermally connected to a back surface of the base portion and having a higher heat conductivity than the heat sink.

3. The vehicle lighting fixture of claim 2, wherein
the heat diffusion member extends on the back surface of the base portion in the intersection direction so as to make thermal contact with the heat dissipation portion from a position adjacent to the light source in the intersection direction.

4. The vehicle lighting fixture of claim 2 or 3, wherein
a surface area enlargement portion is provided at an outer site of the heat dissipation portion in the intersection direction to have a larger surface area than an inner site of the heat dissipation portion in the intersection direction, and the heat diffusion member extending longitudinally is provided at the inner site of the heat dissipation portion in the intersection portion.

5. The vehicle lighting fixture of any one of claims 2 to 4, wherein
the heat diffusion member is formed into a plate shape and has an anisotropy so as to have a lower heat conductivity in a plate thickness direction than in a plate surface direction, and
a thermoplastic mount member is provided behind the heat diffusion member to mount at least one of the heat sink or the air blower on a lighting fixture main body member.

6. The vehicle lighting fixture of any one of claims 1 to 5, wherein
the heat dissipation portion is comprised of:
a heat dissipation main body provided in a peripheral direction; and
a plurality of heat dissipation fins standing outward in the intersection direction from the heat dissipation main body, extending longitudinally, and disposed in the peripheral direction, and
a plate thickness of the base portion is equal to or less than twice a plate thickness of each of the heat dissipation fins.
